# EUROPEAN PATENT APPLICATION

(11) **EP 4 810 806 A1**
(43) Date of publication of application: **23.09.2026**
(21) Application number: 25275020.3
(22) Date of filing: 21.03.2025
(51) Int. Cl.: F16B 5/02, F16C 23/10, B64C 9/02

(54) **ROTARY ACTUATOR**

(71) Applicant: Goodrich Actuation Systems Limited, Wolverhampton, West Midlands WV10 7EH (GB)
(72) Inventor: TIMMS, Jack, Wolverhampton, WW107EH (GB)
(74) Representative: Casalonga

(57) **Abstract**

A rotary actuator (100) is provided which comprises: a rotary component (102); a fixed component (104a, 104b), wherein the rotary component is adapted to rotate about a rotational axis (X-X) relative to the fixed component, wherein the fixed component is configured to be mounted to and fixed relative to a first structure; and a mounting arrangement (106) adapted to mount the rotary component to a second structure such that rotation of the rotary component pivots the second structure about the rotational axis relative to the first structure. The mounting arrangement comprises: a rotary output (108) configured to rotate with the rotary component; a first rotary output aperture (120); a second rotary output aperture (122), wherein the first and second rotary output apertures are spaced from each other and extend through the rotary output; a driving component (130a, 130b) configured to be fixed to the second structure to drive rotation thereof; a first driving component aperture (132); a second driving component aperture (134), wherein the first and second driving component apertures are spaced from each other and extend through the driving component; an eccentric bushing (140) at least partly located in at least one of the first rotary output aperture and the first driving component aperture; a first fastener (170) extending along a first fastener axis (F-F), through the eccentric bushing, the first rotary output aperture and the first driving component aperture; and a second fastener (172) extending along a second fastener axis (G-G), through the second rotary output aperture and the second driving component aperture so as to mount the rotary output to the driving component, wherein the distance between the first fastener axis and the second fastener axis is adjusted by rotation of the eccentric bushing.

## Description

### TECHNICAL FIELD

The present disclosure is concerned with rotary actuators.

### BACKGROUND

Actuators are used in aircraft to control various moveable components and surfaces including, but not only, flight control surfaces such as spoilers, ailerons and wing flaps. Such actuators may be mounted to structure using mounting bars or bolts. These are susceptible to positional and diametric tolerances which can cause rotational backlash. Such backlash can be limited by reducing manufacturing tolerances. However this adds cost and complexity such that alternative improvements are desired.

### SUMMARY

From a first aspect of the disclosure, a rotary actuator is provided. The rotary actuator comprises: a rotary component; a fixed component, wherein the rotary component is adapted to rotate about a rotational axis relative to the fixed component, wherein the fixed component is configured to be mounted to and fixed relative to a first structure; and a mounting arrangement adapted to mount the rotary component to a second structure such that rotation of the rotary component pivots the second structure about the rotational axis relative to the first structure. The mounting arrangement comprises: a rotary output configured to rotate with the rotary component; a first rotary output aperture; a second rotary output aperture, wherein the first and second rotary output apertures are spaced from each other and extend through the rotary output; a driving component configured to be fixed to the second structure to drive rotation thereof; a first driving component aperture; a second driving component aperture, wherein the first and second driving component apertures are spaced from each other and extend through the driving component; an eccentric bushing at least partly located in at least one of the first rotary output aperture and the first driving component aperture; a first fastener extending along a first fastener axis, through the eccentric bushing, the first rotary output aperture and the first driving component aperture; and a second fastener extending along a second fastener axis, through the second rotary output aperture and the second driving component aperture so as to mount the rotary output to the driving component, wherein the distance between the first fastener axis and the second fastener axis is adjusted by rotation of the eccentric bushing.

In any example of the disclosure, the eccentric bushing may comprise a cylindrical sleeve and a flange extending radially outwardly from the cylindrical sleeve at one end thereof.

In any example of the disclosure, the flange may comprise a radially inner flange portion and a radially outer flange portion. The radially outer flange portion may engage with the radially inner flange portion.

In any example of the disclosure, a radially outer surface of the radially inner flange portion may be shaped differently to a radially outer surface of the radially outer flange portion.

In any example of the disclosure, the radially outer surface of the radially inner flange portion may be shaped as a first prism and the radially outer surface of the radially outer flange portion may be shaped as a second prism. The first prism may have a different number of sides from the second prism.

In any example of the disclosure, the rotary actuator may further comprise an alignment feature for locking or limiting rotation of the eccentric bushing.

In any example of the disclosure, the alignment feature may comprise a substantially straight edge configured to engage with an edge of the flange.

In any example of the disclosure, the eccentric bushing may be at least partly located in the first rotary output aperture.

In any example of the disclosure, the driving component may comprise a first driving component part axially spaced from a second driving component part. The rotary component may be located between the first and second driving component parts.

In any example of the disclosure, the mounting arrangement may comprise a further eccentric bushing at least partly located in at least one of the second rotary output aperture and the second driving component aperture. The distance between the first fastener axis and the second fastener axis may be adjusted by rotation of the eccentric bushing and / or by rotation of the further eccentric bushing.

From a further aspect of the disclosure, a method of assembling the rotary actuator as described above is provided. The method comprises: inserting the eccentric bushing into at least one of the first rotary output aperture and the first driving component aperture; inserting the first fastener through the eccentric bushing, the first rotary output aperture and the first driving component aperture; inserting the second fastener through the second rotary output aperture and the second driving component aperture; and rotating the eccentric bushing so to adjust the distance between the first fastener axis and the second fastener axis.

In any example of the disclosure, the eccentric bushing may comprise a cylindrical sleeve and a flange extending radially outwardly from the cylindrical sleeve at one end thereof. The flange may comprise a radially inner flange portion and a radially outer flange portion. The radially outer flange portion may be removed from the eccentric bushing prior to the inserting the eccentric bushing.

In any example of the disclosure, the method may comprise aligning the radially outer flange portion with the radially inner flange portion such that the radially outer flange portion receives the radially inner flange portion after the rotating the eccentric bushing.

In any example of the disclosure, the method may comprise locking or limiting rotation of the eccentric bushing.

In any example of the disclosure, the method may comprise: inserting a further eccentric bushing into at least one of the second rotary output aperture and the second driving component aperture prior to inserting the second fastener; and rotating the eccentric bushing and the further eccentric bushing so to adjust the distance between the first fastener axis and the second fastener axis.

### BRIEF DESCRIPTION

Examples of the invention will now be described, by way of example only, with reference to the drawings in which:
Fig. 1 is a schematic cross section view through part of an aircraft wing;
Fig. 2 is a perspective view of a rotary actuator according to an example of the disclosure;
Fig. 3 is a schematic front view of a rotary actuator according to an example of the disclosure;
Fig. 4a is a cross section view of the rotary actuator of Fig. 3 along line A-A in the direction shown on Fig. 3;
Fig. 4b is an enlarged view of part of the cross section view of Fig. 4a;
Fig. 5 is a perspective view of part of a rotary actuator according to an example of the disclosure;
Fig. 6 is an exploded perspective view of an eccentric bushing according to an example of the disclosure;
Fig. 7 is a perspective view of part of a rotary actuator according to an example of the disclosure; and
Figs. 8a to 8d show a method of assembling a rotary actuator.

### DETAILED DESCRIPTION

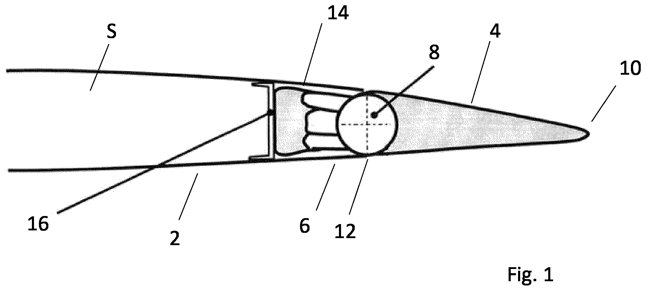

Referring to Fig. 1, this shows an example actuator for a control surface in a wing of an aircraft (not shown). An aircraft wing 2 typically comprises a hollow section S and extends outwardly from a body (not shown) of the aircraft.

A number of control surfaces are typically provided on the wing 2. In the example shown, a control surface 4 is a spoiler provided adjacent an outer end 6 of the wing 2 (in other words, the end of the wing which is furthest from the aircraft body). The control surface 4 is configured to rotate about a hinge 8 in the wing 2 to move relative to the wing when actuated. The rotation of the control surface 4 is configured to alter the speed, altitude and/or direction of movement of the aircraft in flight or on the ground. In the example shown, the hinge 8 is located in the wing 2 and the control surface 4 extends outwardly from the hinge 8 and from the end of the wing to taper to a tip portion 10. It will be appreciated however that the control surface 4 may have any desired configuration and any desired location on an aircraft wing 2 depending on the design and intended use thereof.

A rotary actuator 12 is provided which is configured to move the control surface 4 to rotate about the hinge 8 in either a clockwise or anti-clockwise direction as required. Thus, the control surface 4 may be rotated to be in line with the wing 2 as shown in Fig. 1, to be angled such that the tip portion 10 extends above the wing 2 or to be angled such that the tip portion 10 extends below the wing 2. A control system (not shown) may be provided to control the rotary actuator 12.

As seen in Fig. 1, the rotary actuator 12 may be sized so as to be housed within the hollow section of the wing 2 and or the control surface 4. In some examples, the rotary actuator is an electrical rotary actuator. In any example, the rotary actuator may be a hinge-line actuator. The rotary actuator 12 may be fixed relative to the wing 2 or the aircraft structure so as to provide a rotary drive output relative thereto. In the example shown, the rotary actuator 12 is mounted via a connection mechanism 14 to the rear spar 16 of the wing 2. The rotary output of the rotary actuator 12 can be directly connected to the control surface to rotate the control surface 4 about the hinge 8.

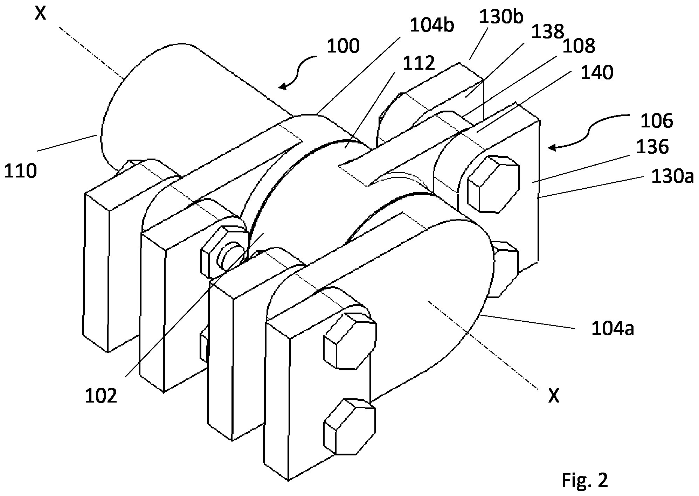

In any example of the disclosure and as seen for example in Figure 2, a rotary actuator 100 which could for example be used in the arrangement described above is provided. The rotary actuator 100 includes a rotary component 102, a fixed component 104 and a mounting arrangement 106. The rotary component 102 is adapted to rotate about a rotational axis X-X relative to the fixed component 104. It will be understood that the rotational axis defines an axial direction as referred to hereinafter. The fixed component 104 is configured to be mounted to and fixed relative to a first structure which is not shown in Figure 2. The first structure could for example be a frame or support or could be part of the structure of an aircraft, for example a wing 2 as in the example described above in relation to Figure 1.

The mounting arrangement 106 is adapted to mount the rotary component 102 to a second structure (not shown) such that rotation of the rotary component 102 pivots the second structure about the rotational axis X-X relative to the first structure. The second structure could for example be a control surface of an aircraft such as the control surface 4 shown in Figure 1. It will however be appreciated that, in other examples, the second structure could be any suitable structure including a flap, door or other hinged component which it is desired to pivot relative to the fixed component.

In any example of the disclosure, the mounting arrangement 106 can include a rotary output 108 which is configured to rotate with the rotary component 102. The rotary component may be a hollow shaft or cuff which is driven to rotate by a central drive shaft 110. In a similar manner, the fixed component 104 may be a hollow shaft or cuff which may be mounted on the central drive shaft 110 but which does not rotate with it. In any example, the fixed component 104 may be positioned axially adjacent to the rotary component 102. In any example, only one fixed component may be provided. In some examples and as seen in Figure 2, the rotary actuator 100 may include a first fixed component 104a positioned at a first axial end of the rotary component 102 and a second fixed component 104b positioned at a second, opposite axial end of the rotary component 102.

The rotary output 108 may be a flange or plate which extends radially outwardly from an outer surface 112 of the rotary component 102. Herein, the term "radially" is used to denote a direction away from or towards the rotational axis X-X and approximately perpendicular thereto. The rotary output 108 may extend along part of the circumference or outer surface of the rotary component 102. In the example shown, the rotary output 108 extends radially outwardly from and along about one half of the circumference of the rotary component 102. It will be appreciated however, that the part of the circumference could be more or less than one half as required.

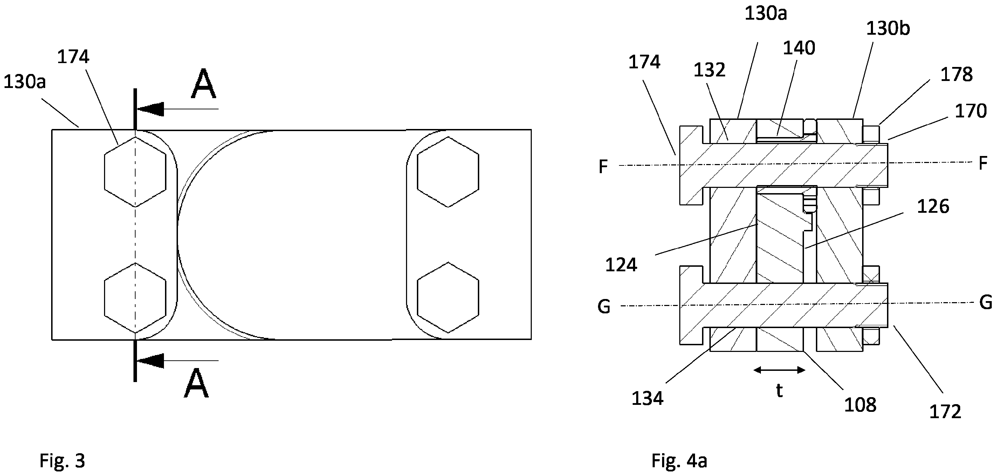

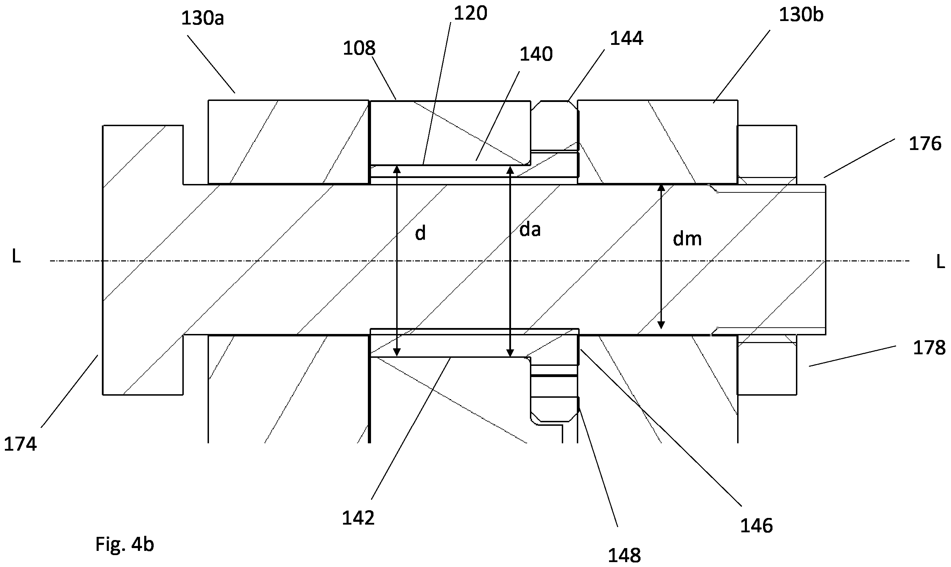

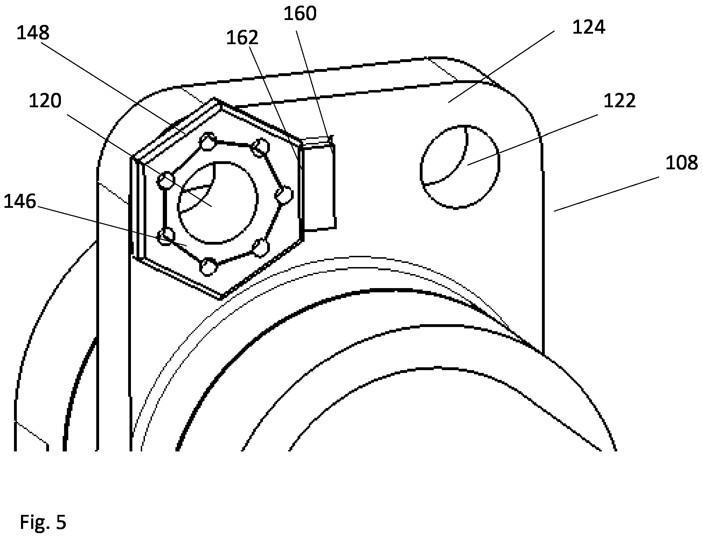

The rotary output 108 may have a thickness t in the axial direction as seen in Figure 4 for example. In Figure 5, only part of the rotary component and the rotary output 108 are shown. The driving component and various other features are not shown to allow various features to be seen more clearly. In any example and as seen in Figure 5, the rotary output 108 includes a first rotary output aperture 120 and a second rotary output aperture 122. The first and second rotary output apertures 120, 122 are spaced from each other and extend through the rotary output 108. The rotary output 108 may have a first surface 124 and a second opposite surface 126. The first surface 124 and the second opposite surface 126 may be joined to each other by an edge surface 128 extending along an outer edge of the rotary output 108. The first surface 124 and the second opposite surface 126 may be axially spaced from each other. The first and second rotary output apertures 120, 122 may extend through the rotary output 108 from the first surface 124 to the second opposite surface 126. The first and second rotary output apertures 120, 122 may extend axially through the rotary output 108.

In any example of the disclosure, the mounting arrangement 106 can include a driving component which is configured to be fixed to the second structure and to drive rotation of the second structure. In some examples and as seen in Figure 2, the driving component can include two parallel and axially spaced driving component parts 130a, 130b which are configured to be fixed to the second structure and to drive rotation of the second structure. In any example, the driving component can include a first driving component aperture 132 and a second driving component aperture 134. The first and second driving component apertures 132, 134 are spaced from each other and extend through the driving component, or through both driving component parts 130a, 130b. The driving component or each driving component part 130a, 130b may have a first surface 136 and a second opposite surface 138. The first surface 136 and the second opposite surface 138 may be joined to each other by an edge surface 140 extending along an outer edge of the driving component or each driving component part 130a, 130b. The first and second driving component apertures 132, 134 may extend through each driving component part 130a, 130b from the first surface 136 to the second opposite surface 138. The first and second driving component apertures 132, 134 may extend axially through the driving component or each driving component part 130a, 130b.

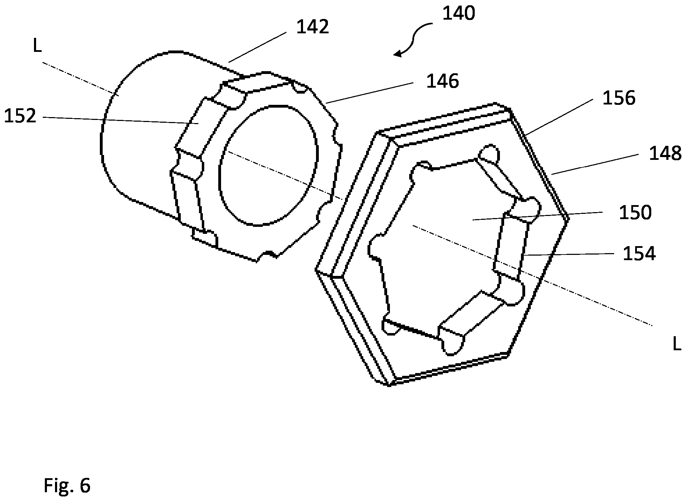

An eccentric bushing 140 is located or positioned in at least one of the first rotary output aperture 120 and the first driving component aperture 132. As seen in Figure 4b and Figure 6 for example, the eccentric bushing 140 may include a cylindrical sleeve 142 having a longitudinal axis L-L. The cylindrical sleeve 142 may have a constant outer diameter d along its axial extent. The cylindrical sleeve 142 may be configured to fit within the first rotary output aperture 120 or the first driving component aperture 132. The longitudinal axis L-L may extend parallel to or approximately parallel to the rotational axis X-X. The outer diameter d of the cylindrical sleeve 142 may be the same as or only slightly less than the diameter da of the first rotary output aperture 120 or the first driving component aperture 132. The cylindrical sleeve 142 may be rotatably supported within the first rotary output aperture 120 or the first driving component aperture 132. The cylindrical sleeve 142 may extend across only some of or all the thickness of the first rotary output or the first driving component. The cylindrical sleeve 142 is hollow and, in any example, may have an inner bore that is radially offset from the outer surface thereof. Thus, the longitudinal axis (not shown) of the inner bore may be radially offset from the longitudinal axis L-L of the cylindrical sleeve 142.

The eccentric bushing 140 may include a flange 144 extending radially outwardly from the cylindrical sleeve 142 at one end thereof. The flange 144 in some examples may be split into a radially inner flange portion 146 which extends outwardly from and may be formed integrally with the cylindrical sleeve 142 and a radially outer flange portion 148 which extends radially outwardly of and around the radially inner flange portion 146. In any example, the radially outer flange portion 148 is configured to be removed from the eccentric bushing 140. The radially outer flange portion 148 has an inner opening 150 in which the radially inner flange portion 146 may be received. A radially outer surface, in some examples a radially outer wall 152 of the radially inner flange portion 146 has a shape corresponding to the shape of a radially inner wall 154 forming the inner opening 150. The radially inner flange portion 146 may extend around a part of or all of the circumference of the cylindrical sleeve 142. In any example, the radially outer wall 152 of the radially inner flange portion 146 and the radially inner wall 154 forming the inner opening 150 may take the form of a polygon when viewed in cross section. In some examples, the radially outer wall 152 of the radially inner flange portion 146 and the radially inner wall 154 forming the inner opening 150 may take the form of a heptagon when viewed in cross section. In any example the shape of the radially outer wall 152 of the radially inner flange portion 146 and the radially inner wall 154 forming the inner opening 150 may be the same when viewed in cross section at any location along the axis L-L of the cylindrical sleeve 142.

In any example, the radially outer flange portion 148 may have a radially outer surface, in some examples a radially outer wall 156 which may take the form of a polygon when viewed in cross section. The radially outer flange portion 148 may extend around a part of or all of the circumference of the cylindrical sleeve 142. The radially outer flange portion 148 may extend around a part of or all of the radially inner flange portion 146. In any example the shape of the radially outer wall 156 of the radially outer flange portion 148 may be the same when viewed in cross section at any location along the axis L-L of the cylindrical sleeve 142. In any example the radially outer wall 156 of the radially outer flange portion 148 may have a different number of sides to the radially inner wall 154 forming the inner opening 150. In some examples and as seen in Figure 6, the radially outer wall 156 of the radially outer flange portion 148 may be hexagonal in cross section such that the radially outer wall 156 of the radially outer flange portion 148 has six sides extending along the axis L-L of the cylindrical sleeve 142. The radially outer wall 156 of the radially outer flange portion 148 may form a hexagonal prism. In this example, the radially inner wall 154 forming the inner opening 150 may be heptagonal in cross section such that the radially inner wall 154 forming the inner opening 150 has seven sides extending along the axis L-L of the cylindrical sleeve 142. The radially inner wall 154 forming the inner opening 150 may form a heptagonal prism. It will be understood that more accurate adjustment of the eccentric bushing 140 may be achieved by first rotating the eccentric bushing 140 using the radially inner flange portion 146, then engaging the radially inner flange portion 146 in the radially outer flange portion 148 and rotating the eccentric bushing 140 further using the radially outer flange portion 148.

As seen for example in Figure 5, an alignment feature 160 may be provided for locking or limiting rotation of the eccentric bushing 140 once it has been rotated or adjusted to a desired position. The alignment feature 160 may be a projection extending axially outwardly from the surface against which the flange 144 of the eccentric bushing 140 rests. In some examples and as seen, the alignment feature 160 may project outwardly from the second opposite surface 126 of the rotary output 108. The alignment feature 160 may have a substantially straight edge 162 configured to engage with an edge of the flange 144 so as to lock or limit rotation thereof.

The mounting arrangement of any example includes a first fastener 170 extending along a first fastener axis F-F and a second fastener 172 extending along a second fastener axis G-G. The first and second fasteners 170, 172 may take any suitable form and could for example be pins or bolts. As seen in Figure 4a, the first fastener 170 and / or the second fastener 172 may include a main body 176 configured to extend along the axis of the fastener and a head 174 or flange provided at a first end of the main body and extending radially outward therefrom in a manner known in the art. In any example, the diameter dm of the main body 176 may correspond to the diameter (not shown) of the inner bore of the eccentric bushing 140.

In any example, the first fastener 170 extends through the eccentric bushing 140, the first rotary output aperture 120 and the first driving component aperture 132. The second fastener 172 extends through the second rotary output aperture 122 and the second driving component aperture 134 so as to mount the rotary output 108 to the driving component 130. The first fastener 170 and / or the second fastener 172 may extend through the rotary output 108 and the driving component 130. In the example shown in which the driving component 130 includes two parallel and axially spaced driving component parts 130a, 130b, the rotary output 108 may be located between the two parallel and axially spaced driving component parts 130a, 130b and the head 174 of the first fastener 170 and / or the second fastener 172 may abut against a first driving component part 130a. A nut 178 or similar fixing means may be provided at a distal end of the first fastener 170 and / or the second fastener 172 and may be tightened against the second driving component part 130b.

It will understood that the distance between the first fastener axis F-F and the second fastener axis G-G can be adjusted by rotation of the eccentric bushing 140. Rotation of the eccentric bushing 140 within the first rotary output aperture 120 can be achieved by rotating the flange 144 as will be described further below. In any example of the disclosure, as described above, rotational backlash in a rotary actuator of the type described can be caused by any or all of diametrical tolerances in the apertures in which the fasteners are located, diametrical tolerances in the fasteners themselves, positional tolerances in the apertures in which the fasteners are located and positional tolerances in the fasteners themselves. Suh rotational backlash can be reduced or, in some examples, eliminated by adjusting the distance between the first fastener axis F-F and the second fastener axis G-G. As described above, the adjustment can be achieved at least in some examples by rotating the eccentric bushing 140.

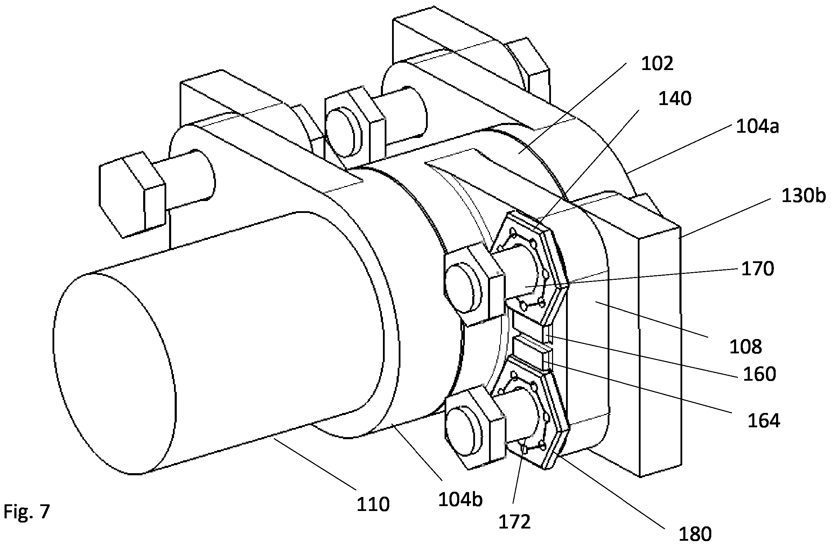

In any example and as seen in Figure 7 (in which the second driving component part has been omitted so that the bushings are visible), the mounting arrangement can include a further eccentric bushing 180 such that both the first and second fasteners 170, 172 extend through a respective bushing 140, 180. The further eccentric bushing 180 may be located in at least one of the second rotary output aperture 122 and the second driving component aperture 134. The further eccentric bushing 180 may take the same form as and have any or all of the features of the eccentric bushing 140. In such examples, the distance between the first fastener axis F-F and the second fastener axis G-G can be adjusted by rotation of the eccentric bushing 140 or by rotation of the further eccentric bushing 180 or by rotation of both the eccentric bushing 140 and the further eccentric bushing 180. In some examples, the adjustment of both eccentric bushings may allow the distance between the rotation axis X-X and the fasteners to be varied, thus further improving the accuracy of the rotary actuator and reducing backlash.

The bushing 140 and the further bushing 180 could both be configured to be locked against rotation by contact with the same alignment feature 160, which could for example be positioned between the bushing 140 and the further bushing 180 and could take the same form as the alignment feature 160 described above.

In other examples however, a first alignment feature 160 could be provided for engaging with the bushing 140 and a second alignment feature 164 could be provided for engaging with the further bushing 180.

In the examples in which the eccentric bushing includes a radially inner flange portion 146 and a radially outer flange portion 148, more accurate adjustment of the eccentric bushing is possible as described further below.

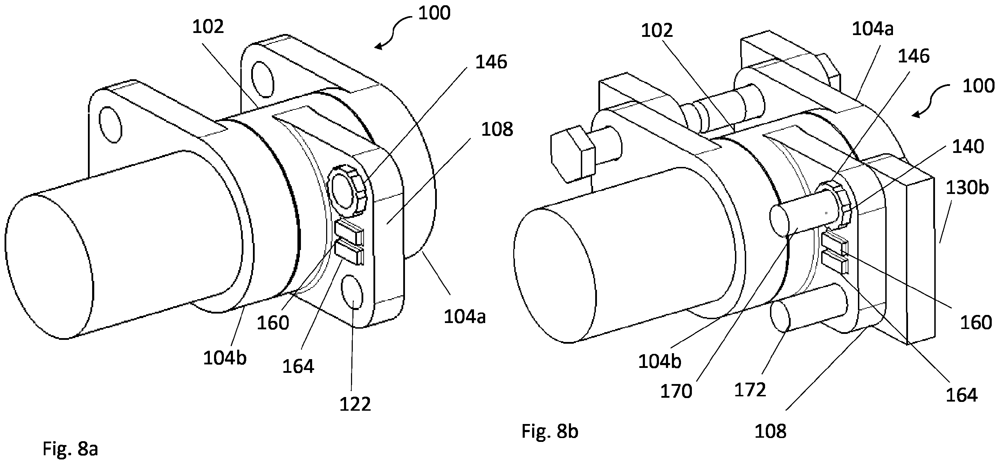

A method of assembling a rotary actuator according to an example of the disclosure will now be described with reference to Figures 8a to 8d.

The method of assembling the rotary actuator of any of the described examples includes: inserting the eccentric bushing into at least one of the first rotary output aperture and the first driving component aperture; inserting the first fastener through the eccentric bushing, the first rotary output aperture and the first driving component aperture; inserting the second fastener through the second rotary output aperture and the second driving component aperture; and rotating the eccentric bushing so to adjust the distance between the first fastener axis and the second fastener axis. It will be understood that the rotating step described here includes allowing the eccentric bushing to free float to find its centre of rotation or physically rotating the eccentric bushing relative to the aperture in which is located.

One example method will now be described in further detail. As seen in Figure 8a, the rotary actuator 100 is initially not mounted to the driving component (130, not shown in Figure 8a). The radially outer flange portion 148 (not shown in Figure 8a) is removed from the eccentric bushing 140 and the cylindrical sleeve 142 of the eccentric bushing 140 is then inserted into the first rotary output aperture 120 such that the radially inner flange portion 146 abuts against the rotary output 108.

As seen in Figure 8b, the rotary output 108 is then mated with the first and second driving component parts 130a, 130b (the first driving component part 130a is not shown in the Figure to allow the eccentric bushing 140 to be seen). The first and second fasteners 170, 172 are then inserted through their respective apertures and the eccentric bushing 140 is allowed to free float to find its own centre with the first fastener 170. It will be understood that in alternative examples, the eccentric bushing could be rotated to a first position by applying a force to rotate the radially inner flange portion 146 rather than allowing the bushing to free float. This would allow a particular distance between the first and second fasteners 170, 172 to be set as required.

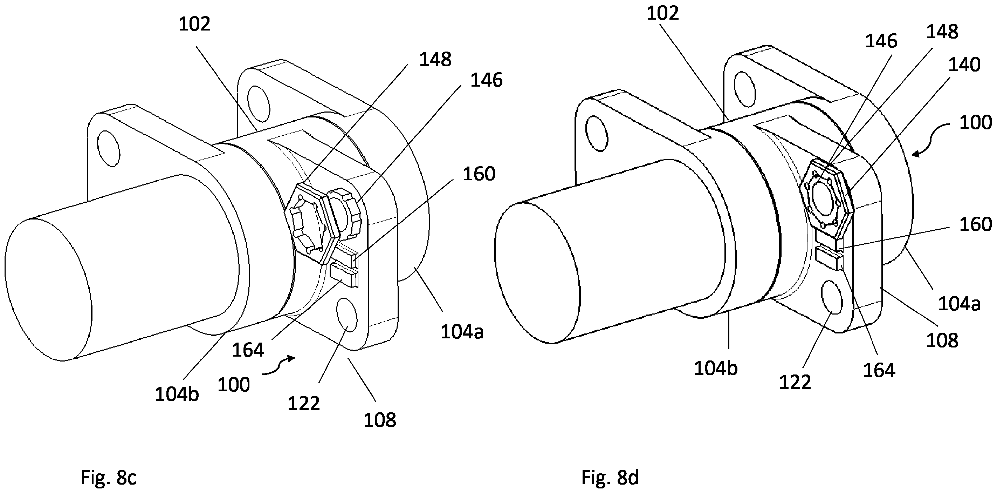

Next, as shown in Figure 8c, the first and second fasteners 170, 172 are removed to disassemble the rotary actuator from the driving component 130. The radially outer flange portion 148 is then aligned with the radially inner flange portion 146 and moved axially towards the rotary output 108 such that the radially outer flange portion 148 receives the radially inner flange portion 146 and an outer edge of the radially outer flange portion 148 is aligned with or as close as possibly aligned with a substantially straight edge 162 of the alignment feature 160 (as shown in Figure 8d).

Once the eccentric bushing 140 has been locked in position by the alignment feature 160 as described above, the rotary output 108 can be fitted to the driving component 130 using the first and second fasteners 170, 172.

It will be understood that in any example of the disclosure, approximately parallel to may mean extending within -30 degrees and +30 degrees of parallel to, or within - 20 degrees and +20 degrees of parallel to, or within -10 degrees and +10 degrees of parallel to, or within -5 degrees and +5 degrees of parallel to, or within -1 degrees and +1 degrees of parallel to. It will be understood that in any example of the disclosure, approximately perpendicular to may mean extending within -30 degrees and +30 degrees of perpendicular to, or within -20 degrees and +20 degrees of perpendicular to, or within -10 degrees and +10 degrees of perpendicular to, or within -5 degrees and +5 degrees of perpendicular to, or within -1 degrees and +1 degrees of perpendicular to.

While the disclosure has been described in detail in connection with only a limited number of examples, it should be readily understood that the disclosure is not limited to such disclosed examples. Rather, the disclosure can be modified to incorporate any number of variations, alterations, substitutions, or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description but is only limited by the scope of the appended claims.

## Claims

1. A rotary actuator comprising:
a rotary component;
a fixed component,
wherein the rotary component is adapted to rotate about a rotational axis relative to the fixed component,
wherein the fixed component is configured to be mounted to and fixed relative to a first structure; and
a mounting arrangement adapted to mount the rotary component to a second structure such that rotation of the rotary component pivots the second structure about the rotational axis relative to the first structure,
wherein the mounting arrangement comprises:
a rotary output configured to rotate with the rotary component;
a first rotary output aperture;
a second rotary output aperture,
wherein the first and second rotary output apertures are spaced from each other and extend through the rotary output;
a driving component configured to be fixed to the second structure to drive rotation thereof;
a first driving component aperture;
a second driving component aperture,
wherein the first and second driving component apertures are spaced from each other and extend through the driving component;
an eccentric bushing at least partly located in at least one of the first rotary output aperture and the first driving component aperture;
a first fastener extending along a first fastener axis, through the eccentric bushing, the first rotary output aperture and the first driving component aperture; and
a second fastener extending along a second fastener axis, through the second rotary output aperture and the second driving component aperture so as to mount the rotary output to the driving component,
wherein a distance between the first fastener axis and the second fastener axis is adjusted by rotation of the eccentric bushing.

2. A rotary actuator as claimed in claim 1, wherein the eccentric bushing comprises a cylindrical sleeve and a flange extending radially outwardly from the cylindrical sleeve at one end thereof.

3. A rotary actuator as claimed in claim 2, wherein the flange comprises a radially inner flange portion and a radially outer flange portion, wherein the radially outer flange portion engages with the radially inner flange portion.

4. A rotary actuator as claimed in claim 3, wherein a radially outer surface of the radially inner flange portion is shaped differently to a radially outer surface of the radially outer flange portion.

5. A rotary actuator as claimed in claim 4, wherein the radially outer surface of the radially inner flange portion is shaped as a first prism and the radially outer surface of the radially outer flange portion is shaped as a second prism, wherein the first prism has a different number of sides from the second prism.

6. A rotary actuator as claimed in any preceding claim, further comprising an alignment feature for locking or limiting rotation of the eccentric bushing.

7. A rotary actuator as claimed in claim 6 when dependent on any of claims 2 to 6, wherein the alignment feature comprises a substantially straight edge configured to engage with an edge of the flange.

8. A rotary actuator as claimed in any preceding claim, wherein the eccentric bushing is at least partly located in the first rotary output aperture.

9. A rotary actuator as claimed in claim 8, wherein the driving component comprises a first driving component part axially spaced from a second driving component part, wherein the rotary component is located between the first and second driving component parts.

10. A rotary actuator as claimed in any preceding claim, wherein the mounting arrangement comprises a further eccentric bushing at least partly located in at least one of the second rotary output aperture and the second driving component aperture,
wherein the distance between the first fastener axis and the second fastener axis can be adjusted by rotation of the eccentric bushing and / or by rotation of the further eccentric bushing.

11. A method of assembling the rotary actuator as claimed in claim 1, the method comprising:
inserting the eccentric bushing into at least one of the first rotary output aperture and the first driving component aperture;
inserting the first fastener through the eccentric bushing, the first rotary output aperture and the first driving component aperture;
inserting the second fastener through the second rotary output aperture and the second driving component aperture; and
rotating the eccentric bushing so to adjust the distance between the first fastener axis and the second fastener axis.

12. A method as claimed in claim 11, wherein the eccentric bushing comprises a cylindrical sleeve and a flange extending radially outwardly from the cylindrical sleeve at one end thereof, wherein the flange comprises a radially inner flange portion and a radially outer flange portion, wherein the radially outer flange portion is removed from the eccentric bushing prior to the inserting the eccentric bushing.

13. A method as claimed in claim 12, comprising aligning the radially outer flange portion with the radially inner flange portion such that the radially outer flange portion receives the radially inner flange portion after the rotating the eccentric bushing.

14. A method as claimed in any of claims 11 to 13, comprising locking or limiting rotation of the eccentric bushing.

15. A method as claimed in any of claims 11 to 14, comprising:
inserting a further eccentric bushing into at least one of the second rotary output aperture and the second driving component aperture prior to inserting the second fastener; and
rotating the eccentric bushing and the further eccentric bushing so to adjust the distance between the first fastener axis and the second fastener axis.
